# EUROPEAN PATENT SPECIFICATION

(11) **EP 4 211 703 B1**
(45) Date of publication and mention of the grant of the patent: **04.09.2024**
(21) Application number: 21770241.4
(22) Date of filing: 02.09.2021
(51) Int. Cl.: G21C 1/22, G21C 3/54, G21C 1/16, G21C 1/03

(54) **MOLTEN SALT COOLANT FOR NUCLEAR REACTOR**
KÜHLMITTEL AUS GESCHMOLZENEM SALZ FÜR KERNREAKTOR
FLUIDE DE REFROIDISSEMENT À SELS FONDUS POUR RÉACTEUR NUCLÉAIRE

(30) Priority: 09.09.2020 GB 202014181; 23.12.2020 GB 202020536
(43) Date of publication of application: 19.07.2023
(73) Proprietor: Scott, Ian Richard, Stratford on Avon, Warwickshire CV37 9TQ (GB)
(72) Inventor: Scott, Ian Richard, Stratford on Avon, Warwickshire CV37 9TQ (GB)
(74) Representative: Marks & Clerk LLP
(86) International application number: PCT/EP2021/074301
(87) International publication number: WO 2022/053396

(56) References cited:
- WO-A2-2019/231971
- WO-A2-2020/123513
- JP-A- 2014 119 429
- US-A1- 2015 036 779
- US-A1- 2015 228 363
- US-A1- 2015 340 109

## Description

### Field of the Invention

The present invention relates coolant systems for nuclear reactors. In particular, the invention relates to molten salt coolants for use in nuclear reactors.

### Background

Nuclear reactors using molten salts as fuel or reactor coolant have been known for many years. There are several vital properties for such salts which were reviewed in depth by Williams et al (ORNL/TM-2006/12) who, like many other authors recommended that salt mixtures containing LiF, BeF₂, NaF, ZrF₄, RbF and KF should be considered (see tables A and B in the above reference).

Molten salt reactors utilising graphite as moderator are known to suffer problems of interaction of the molten salt with graphite. They suffer a particular problem when the redox state of the molten salt is maintained sufficiently strongly reducing so as not to extract chromium from steels. Many suitable molten salts react with graphite under such conditions. ZrF₄ for example, which is particularly easy to maintain in a reducing condition as described by Scott (PCT/GB2016/053861) reacts readily with graphite forming stable carbides, as does the widely proposed FLIBE salt with BeF₂.

There is a need therefore for a molten salt for use in contact with graphite in nuclear reactors which can be maintained readily in a strongly reducing condition without causing degradation of the graphite.

### Summary

According to a first aspect of the present invention, there is provided the use of a molten salt comprising aluminium trifluoride and sodium fluoride as a primary coolant for a fission reactor, wherein the molten salt is in contact with graphite and with aluminium metal during operation of the fission reactor.

According to a second aspect of the invention, there is provided a nuclear fission reactor. The nuclear fission reactor comprises a reactor core and a primary coolant system. The reactor core comprises one or more containment units containing fissile fuel. The primary coolant system comprises a primary coolant and is configured such that the primary coolant is in contact with the containment units and removes heat from the reactor core. The primary coolant is a molten salt comprising aluminium trifluoride and sodium fluoride. The nuclear fission reactor comprises aluminium metal and graphite arranged such that the aluminium metal and the graphite are in contact with the primary coolant during operation of the reactor.

According to a third aspect of the invention, there is provided a nuclear fission reactor. The nuclear fission reactor comprises a heat exchanger and a fuel salt system. The fuel salt system comprises a reactor core and a fuel salt, and is configured such that the fuel salt flows between the reactor core and the heat exchanger. The fuel salt is a molten salt comprising aluminium trifluoride, sodium fluoride, and a chloride or fluoride of an element having a fissile isotope.

### Brief Description of the Drawings

Figure 1 is a phase diagram of an AlF₃ and NaF mixture;
Figure 2 is a schematic diagram of an exemplary reactor;
Figure 3 is a schematic diagram of an alternative exemplary reactor.

### Detailed Description

A nuclear reactor in which a molten salt coolant is in contact with graphite is cooled with a molten salt comprising aluminium trifluoride (AlF₃) and sodium fluoride (NaF) with the coolant further in contact with metallic aluminium in the bulk molten or dispersed states. The molten salt may be used as is, where the coolant salt carries heat from immobile nuclear fuel structures, or may be mixed with fluorides of elements having fissile isotopes, e.g. actinide fluorides, where the coolant is also the fissile fuel of the reactor.

The metallic aluminium may be added as such or formed in situ by addition of a reducing agents such as sodium metal, by electrolytic processes, or by other known processes.

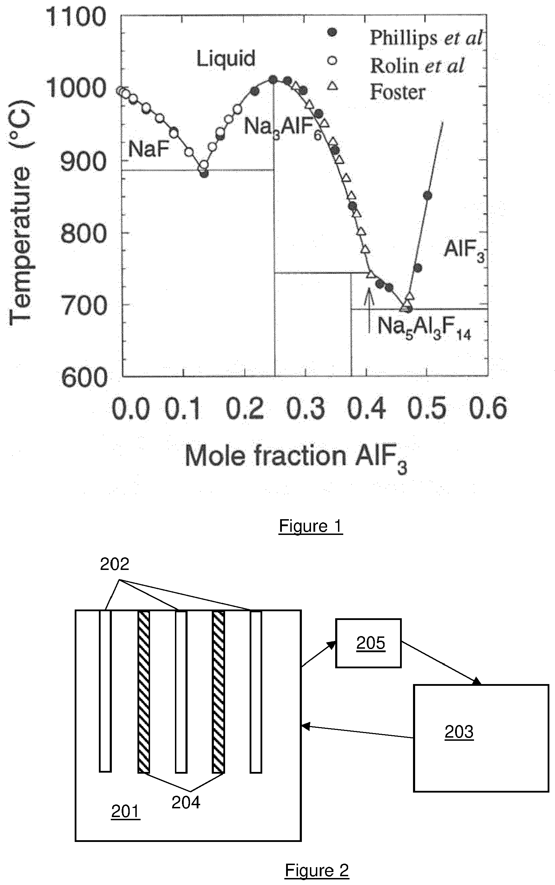

The eutectic mixture of AlF₃ and NaF (approx. 55% mol% NaF and 45mol% AIF3) has a particular desirable combination of properties as shown in figure 1. Its melting point is approximately 700°C making it a practical coolant for operating temperature ranges above 750°C. Variations in the proportion of AIF3 are possible, at the expense of raising the operating temperature range and can be desirable as reducing the AIF3 proportion even marginally can lower the vapour pressure of the salt. Small amounts (e.g. up to 10 mol%) of other compounds may also be present within the molten salt. For example, the proportion of NaF may be 45 to 65 mol%, and the proportion of AlF₃ may be 35 to 55 mol% (capped at a total of 100%, and with the remainder being formed from other salts if the proportion of AlF₃+NaF is less than 100%). These concentrations will keep the melting point of the AlF₃/NaF mixture below 900°C, eliminating potential build-up of sodium vapour due to the production of metallic sodium in a strongly reducing mixture above the boiling point of sodium. The vapour pressure is manageable (0.05mbar) at 900°C, but rapidly increases above that temperature and would require venting or other gas control measures.

The eutectic AlF₃/NaF salt has a low viscosity falling from 1.2cP at 750°C to 1cP at 830°C making it a close to ideal coolant with flow properties similar to liquid water.

Its neutron absorbance is particularly low as Na, F and Al have respectively thermal neutron cross sections of 531mb, 9.6mb and 230mb.

A particularly important property of these salt systems is that they can dissolve over 1% of aluminium oxide without increasing their viscosity significantly. In the context of nuclear reactor coolants it allows the salt to absorb substantial amounts of oxygen without major changes in its properties provided that the resulting fluorine produced is neutralised. The presence of substantial quantities of aluminium metal in the system therefore allows the molten salt to remain non corrosive to metals despite substantial leakage of water or oxygen into the system. Active processes to maintain the low redox state can thus be replaced with simple passive presence of aluminium metal, which will effectively neutralise the fluorine produced. Since aluminium melts at a lower temperature than the AIF3/NaF eutectic, the aluminium will normally be in the liquid state which is desirable as it prevents formation of a passivating layer of aluminium oxide on the surface of the metal.

However, it has been found that this use of aluminium metal within the system means that , in contrast to suggestions in the literature, NaF is not interchangeable with other alkali metal salts when graphite is also present. Replacement with lithium, potassium or rubidium fluoride results in the production of the alkali metal in metallic form, which intercalates into the graphite, rapidly damaging its structure. While not wishing to be bound by theory, we believe that the particular resistance of graphite to the NaF salt in this scenario is a result of the thermodynamic barrier to sodium intercalation in graphite preventing formation of damaging concentrations of sodium in the molten salt. In contrast, the positive thermodynamic driving force for intercalation of the other alkali metals results in the equilibrium between aluminium and those metals shifting towards production of the metals with the result that high levels of intercalation take place.

LiF, KF or RbF can be tolerated in the salt provided that they are not the primary component (i.e. they are present in lower amounts than NaF). At such low concentrations, the ratio of those contaminating salts to graphite surface is such that they are depleted before significant graphite damage occurs.

There is a second factor in stability of graphite in reducing molten salts. This is formation of carbides. In the case of zirconium fluoride the reaction of the reducing zirconium species with graphite destroys the graphite structure. Aluminium fluoride, in contact with aluminium metal, does form a carbide, however experience in aluminium smelters has shown that this carbide forms a stable surface coating which does not degrade the graphite.

The combination of AlF₃ and NaF is thus uniquely suited to the application in graphite containing nuclear reactors as both the Al and Na elements interact benignly with the graphite while replacement of either with comparable fluorides results in graphite damage.

Figure 2 is a schematic diagram of an exemplary reactor. The reactor comprises a core 201 containing one or more containment units 202 containing fissile fuel. The containment units may be fuel rods containing solid fissile fuel or molten salt fissile fuel, or may be any other suitable fissile fuel containment for use in a reactor where the coolant is separate from the fissile fuel. The reactor further comprises a cooling system for cooling the fissile fuel, the cooling system comprising a primary coolant which is a molten salt composed of AlF₃ and NaF as described above. In this example, the coolant system comprises a heat exchanger 203, and the arrows show coolant flow between the heat exchanger and the core. The reactor further comprises graphite components in contact with the primary coolant - in this example the control rods 204 - and a system 205 for contacting the primary coolant with aluminium metal. This system may be simply a region of the coolant channel where aluminium metal is present, and/or may include a unit for the addition of a reducing agent such as sodium, and/or an electrolysis system.

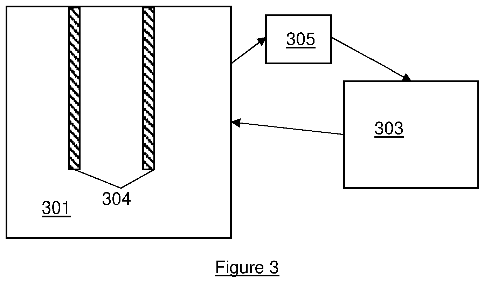

Figure 3 is a schematic diagram of an alternative exemplary reactor. The reactor comprises a core 301, and a cooling system for cooling the reactor. The primary coolant of the cooling system is also the fuel salt for the reactor, and is a molten salt comprising AlF₃, NaF, and a fluoride of an element having a fissile isotope. The cooling system comprises a heat exchanger 303. The reactor further comprises graphite components in contact with the primary coolant - in this example the control rods 304 - and a system 305 for contacting the molten salt with aluminium metal. This system may be simply a region of the coolant channel where aluminium metal is present, and/or may include a unit for the addition of a reducing agent such as sodium, and/or an electrolysis system.

While AlF₃ has been mentioned in passing in existing documents as a potential constituent of a coolant salt, these previous discussions have not addressed the issues described above of ensuring adequate oxygen absorption while also preventing contamination of graphite structures.

Some properties of AlF₃ are mentioned in the Williams et al (ORNL/TM-2006/12) paper mentioned earlier, but only in tables of properties and with no suggestion that they are appropriate salts for nuclear use. Specifically, the system NaF/AlF₃ is mentioned in table 8 of this paper as having a composition of 75% NaF/25% AlF₃ with a melting point of 1000°C, without any discussion of the need to mitigate production of sodium gas. Additionally, there is no disclosure of contact between the coolant and graphite and aluminium..

The definitive report regarding molten salts for nuclear reactors (Thoma, ORNL-2548) lists a large number of potential salt systems but includes no AlF₃ salts.

Holcomb et al (ORNL/TM-2010/156) while mentioning the use of AlF₃ in aluminium smelting (p3) where it is extensively use, mention it only once in their paper (table 9, p42) only to record the thermal conductivity of the same 75 mol% NaF/25mol% AlF₃ salt mentioned in Williams, with no mention of its suitability as a nuclear reactor coolant, or the other particular issues which arise from that use (e.g. the interaction with graphite).

AlF₃ based salts have been proposed for use in reprocessing of spent nuclear fuel, for example by Carr et al (ORNL 4574) and Thoma (ORNL-3594) in the fluoride volatility process for recovery of uranium. No mention in either paper was made of AlF₃ use in nuclear reactor cooling.

The World Nuclear Association (https://www.world-nuclear.org/information-library/current-and-future-generation/molten-salt-reactors.aspx) mention AlF₃ salt as secondary coolants thus
*" In industrial applications molten fluoride salts (possibly simply cryolite* - *Na-Al fluoride) are a preferred interface fluid in a secondary circuit between the nuclear heat source and any chemical plant. The aluminium smelting industry provides substantial experience in managing them safely. "*
but does not mention them as primary reactor coolants.

Laurenty (The LM-LS experiment: investigating corrosion control in Liquid Fluoride Salts by Liquid alkali Metal, Report UCBTH-06-002, 2006) mentions Al and AlF₃ as part of a corrosion control system for molten salt coolant in the Advanced High Temperature Reactor but rejects them as unsuitable (p30), which is clearly teaching away from their use.

Benson et al (WO2019/231971, WO2020/123509, 2020/123513) list AlF₃ as one of a large number of salts that could be incorporated into molten salt nuclear reactors but ascribe no particular advantages of the use of that salt. Benson does not consider the use of aluminium metal to maintain the reduction state of the salt, and therefore does not consider the issue described above of the reaction of the salt with graphite.

## Claims

1. Use of a molten salt comprising aluminium trifluoride and sodium fluoride as a primary coolant for a fission reactor; wherein the molten salt is in contact with graphite and with aluminium metal during operation of the fission reactor.

2. Use according to claim 1, wherein the molten salt further comprises fissile isotopes, and comprising using the molten salt as both the primary coolant and the fuel salt of the fission reactor.

3. Use according to any preceding claim, wherein the molten salt contains 45 to 65 mol% sodium fluoride and 35 to 55 mol% aluminium trifuoride.

4. Use according to any preceding claim, wherein the mixture is at a eutectic point for the salt mixture.

5. Use according to any preceding claim, wherein the aluminium metal is formed in situ.

6. Use according to claim 5, wherein the aluminium metal is formed by one of:
the addition of a reducing agent to the molten salt;
the addition of metallic sodium to the molten salt;
electrolysis of the molten salt.

7. A nuclear fission reactor comprising:
a reactor core, the reactor core (201, 301) comprising one or more containment units (202) containing fissile fuel;
a primary coolant system comprising a primary coolant, configured such that the primary coolant is in contact with the containment units and removes heat from the reactor core;
wherein:
the primary coolant is a molten salt comprising aluminium trifluoride and sodium fluoride;
the nuclear fission reactor comprises graphite (204) arranged such that the graphite is in contact with the primary coolant during operation of the reactor; and
the nuclear fission reactor comprises a system for providing contact between aluminium metal and the molten salt during operation of the reactor.

8. A nuclear fission reactor (201, 301), the reactor comprising:
a heat exchanger (203);
a fuel salt system comprising a reactor core and a fuel salt, and configured such that the fuel salt flows between the reactor core and the heat exchanger;
wherein:
the fuel salt is a molten salt comprising aluminium trifluoride, sodium fluoride, and a chloride or fluoride of an element having a fissile isotope;
the nuclear fission reactor comprises graphite (205) arranged such that the graphite is in contact with the primary coolant during operation of the reactor; and
the nuclear fission reactor comprises a system (203) for providing contact
between aluminium metal and the molten salt during operation of the reactor.

9. A nuclear fission reactor according to claim 7 or 8, wherein the molten salt contains 50 to 60 mol% aluminium trifluoride and 40 to 50 mol% sodium fluoride.

10. A nuclear fission reactor according to any one of claims 7 to 9, wherein the mixture is at a eutectic point for the salt mixture.

11. A nuclear fission reactor according to any one of claims 7 to 10, wherein the system for providing contact between aluminium metal and the molten salt comprises one or more of:
an aluminium metal component in contact with the molten salt;
a reducing agent supply unit configured to supply a reducing agent or sodium metal to the molten salt;
an electrolysis unit configured to electrolyse the molten salt.

## Patentansprüche

1. Verwendung eines geschmolzenen Salzes, das Aluminiumtrifluorid und Natriumfluorid umfasst, als primäres Kühlmittel für einen Spaltungsreaktor; wobei das geschmolzene Salz während eines Betriebs des Spaltungsreaktors in Kontakt mit Graphit und mit Aluminiummetall steht.

2. Verwendung nach Anspruch 1, wobei das geschmolzene Salz ferner spaltbare Isotope umfasst, und umfassend das Verwenden des geschmolzenen Salzes sowohl als das primäre Kühlmittel als auch als das Brennstoffsalz des Spaltungsreaktors.

3. Verwendung nach einem der vorhergehenden Ansprüche, wobei das geschmolzene Salz 45 bis 65 Mol-% Natriumfluorid und 35 bis 55 Mol-% Aluminiumtrifluorid enthält.

4. Verwendung nach einem der vorhergehenden Ansprüche, wobei sich das Gemisch an einem eutektischen Punkt für das Salzgemisch befindet.

5. Verwendung nach einem der vorhergehenden Ansprüche, wobei das Aluminiummetall in situ gebildet wird.

6. Verwendung nach Anspruch 5, wobei das Aluminiummetall durch einen der folgenden Schritte gebildet wird:
die Zugabe eines Reduktionsmittels zu dem geschmolzenen Salz;
die Zugabe von metallischem Natrium zu dem geschmolzenen Salz;
Elektrolyse des geschmolzenen Salzes.

7. Kernspaltungsreaktor, Folgendes umfassend:
einen Reaktorkern, wobei der Reaktorkern (201, 301) eine oder mehrere Einschließungseinheiten (202) umfasst, die spaltbaren Brennstoff enthalten;
ein primäres Kühlsystem, das ein primäres Kühlmittel umfasst, das so konfiguriert ist, dass das primäre Kühlmittel in Kontakt mit den Einschließungseinheiten steht und Wärme aus dem Reaktorkern entfernt;
wobei:
das primäre Kühlmittel ein geschmolzenes Salz ist, das Aluminiumtrifluorid und Natriumfluorid umfasst;
der Kernspaltungsreaktor Graphit (204) umfasst, der so angeordnet ist, dass der Graphit während eines Betriebs des Reaktors in Kontakt mit dem primären Kühlmittel steht; und
der Kernspaltungsreaktor ein System umfasst, um während eines Betriebs des Reaktors einen Kontakt zwischen Aluminiummetall und dem geschmolzenen Salz bereitzustellen.

8. Kernspaltungsreaktor (201, 301), wobei der Reaktor Folgendes umfasst:
einen Wärmetauscher (203);
ein Brennstoffsalzsystem, das einen Reaktorkern und ein Brennstoffsalz umfasst, und so konfiguriert ist, dass das Brennstoffsalz zwischen dem Reaktorkern und dem Wärmetauscher strömt;
wobei:
das Brennstoffsalz ein geschmolzenes Salz ist, das Aluminiumtrifluorid, Natriumfluorid und ein Chlorid oder Fluorid eines Elements umfasst, das ein spaltbares Isotop aufweist;
der Kernspaltungsreaktor Graphit (205) umfasst, der so angeordnet ist, dass der Graphit während eines Betriebs des Reaktors in Kontakt mit dem primären Kühlmittel steht; und
der Kernspaltungsreaktor ein System (203) umfasst, um während eines Betriebs des Reaktors einen Kontakt zwischen Aluminiummetall und dem geschmolzenen Salz bereitzustellen.

9. Kernspaltungsreaktor nach Anspruch 7 oder 8, wobei das geschmolzene Salz 50 bis 60 Mol-% Aluminiumtrifluorid und 40 bis 50 Mol-% Natriumfluorid enthält.

10. Kernspaltungsreaktor nach einem der Ansprüche 7 bis 9, wobei sich das Gemisch an einem eutektischen Punkt für das Salzgemisch befindet.

11. Kernspaltungsreaktor nach einem der Ansprüche 7 bis 10, wobei das System zum Bereitstellen eines Kontakts zwischen Aluminiummetall und dem geschmolzenen Salz eine oder mehrere von Folgendem umfasst:
eine Komponente aus Aluminiummetall, die in Kontakt mit dem geschmolzenen Salz steht;
eine Reduktionsmittel-Zufuhreinheit, die konfiguriert ist, um dem geschmolzenen Salz ein Reduktionsmittel oder Natriummetall zuzuführen;
eine Elektrolyseeinheit, die konfiguriert ist, um das geschmolzene Salz zu elektrolysieren.

## Revendications

1. Utilisation d'un sel fondu, comprenant du trifluorure d'aluminium et du fluorure de sodium, comme fluide de refroidissement primaire pour un réacteur de fission ; dans laquelle le sel fondu est en contact avec du graphite et avec de l'aluminium métallique pendant une exploitation du réacteur de fission.

2. Utilisation selon la revendication 1, dans laquelle le sel fondu comprend en outre des isotopes fissiles, et comprenant l'utilisation du sel fondu à la fois comme fluide de refroidissement primaire et comme sel combustible du réacteur de fission.

3. Utilisation selon l'une quelconque des revendications précédentes, dans laquelle le sel fondu contient 45 à 65 % en moles de fluorure de sodium et 35 à 55 % en moles de trifluorure d'aluminium.

4. Utilisation selon l'une quelconque des revendications précédentes, dans laquelle le mélange est à un point eutectique pour le mélange de sels.

5. Utilisation selon l'une quelconque des revendications précédentes, dans laquelle l'aluminium métallique est formé in situ.

6. Utilisation selon la revendication 5, dans laquelle l'aluminium métallique est formé par un parmi :
l'ajout d'un agent réducteur au sel fondu ;
l'ajout de sodium métallique au sel fondu ;
une électrolyse du sel fondu.

7. Réacteur de fission nucléaire comprenant :
un coeur de réacteur, le coeur de réacteur (201, 301) comprenant une ou plusieurs unités de confinement (202) contenant du combustible fissile ;
un système de refroidissement primaire comprenant un fluide de refroidissement primaire, configuré de sorte que le fluide de refroidissement primaire est en contact avec les unités de confinement et élimine de la chaleur du coeur de réacteur ;
dans lequel :
le fluide de refroidissement primaire est un sel fondu comprenant du trifluorure d'aluminium et du fluorure de sodium ;
le réacteur de fission nucléaire comprend du graphite (204) agencé de telle façon que le graphite est en contact avec le fluide de refroidissement primaire pendant une exploitation du réacteur ; et
le réacteur de fission nucléaire comprend un système pour fournir un contact entre un aluminium métallique et le sel fondu pendant une exploitation du réacteur.

8. Réacteur de fission nucléaire (201, 301), le réacteur comprenant :
un échangeur de chaleur (203) ;
un système à sel combustible comprenant un coeur de réacteur et un sel combustible, et configuré de sorte que le sel combustible s'écoule entre le coeur de réacteur et l'échangeur de chaleur ;
dans lequel :
le sel combustible est un sel fondu comprenant du trifluorure d'aluminium, du fluorure de sodium et un chlorure ou fluorure d'un élément ayant un isotope fissile ;
le réacteur de fission nucléaire comprend du graphite (205) agencé de telle sorte que le graphite est en contact avec le fluide de refroidissement primaire pendant une exploitation du réacteur ; et
le réacteur de fission nucléaire comprend un système (203) pour fournir un contact entre un aluminium métallique et le sel fondu pendant une exploitation du réacteur.

9. Réacteur de fission nucléaire selon la revendication 7 ou 8, dans lequel le sel fondu contient 50 à 60 % en moles de trifluorure d'aluminium et 40 à 50 % en moles de fluorure de sodium.

10. Réacteur de fission nucléaire selon l'une quelconque des revendications 7 à 9, dans lequel le mélange est à un point eutectique pour le mélange de sels.

11. Réacteur de fission nucléaire selon l'une quelconque des revendications 7 à 10, dans lequel le système pour fournir un contact entre un aluminium métallique et le sel fondu comprend un ou plusieurs des éléments suivants :
un composant à base d'aluminium métallique en contact avec le sel fondu ;
une unité d'alimentation en agent réducteur configurée pour alimenter le sel fondu en un agent réducteur ou un sodium métallique ;
une unité d'électrolyse configurée pour électrolyser le sel fondu.
